## Europäisches Patentamt
## European Patent Office
## Office européen des brevets

(19)

(11) Veröffentlichungsnummer: **0 182 053 B1**

(12) # EUROPÄISCHE PATENTSCHRIFT

(45) Veröffentlichungstag der Patentschrift: 25.09.91

(21) Anmeldenummer: 85112456.0

(22) Anmeldetag: 02.10.85

(51) Int. Cl.⁵: **F16K 11/07**, G05D 16/20, F16K 31/02, F16K 17/04, B60T 11/34

(54) Elektromagnetisch betätigbares Druckregelventil.

(30) Priorität: 03.10.84 DE 3436185

(43) Veröffentlichungstag der Anmeldung:
28.05.86 Patentblatt 86/22

(45) Bekanntmachung des Hinweises auf die Patenterteilung:
25.09.91 Patentblatt 91/39

(84) Benannte Vertragsstaaten:
**DE FR GB IT**

(56) Entgegenhaltungen:
DE-A- 1 600 734     DE-A- 1 917 598
DE-A- 2 531 187     DE-A- 2 621 272
DE-B- 1 107 036     US-A- 3 899 003

SOVIET INVENTIONS ILLUSTRATED, Sektion EL, Woche 84/22, 11. Juli 1984 DERWENT PUBLICATIONS LTD., London T 06 SU-1040-472A (METAL CUTTING EQUIP)

PATENT ABSTRACTS OF JAPAN, unexamined applications, M Field, Vol. 4, No. 123, 30. August 1980 THE PATENT OFFICE JAPANESE GOVERNMENT Seite 14 M 29 Kokai No. 55-78

869 (TOYOOKI KOGYO)

(73) Patentinhaber: **Jos. Schneider Optische Werke Kreuznach GmbH & Co. KG**
**Ringstrasse 132**
**W-6550 Bad Kreuznach(DE)**

(72) Erfinder: **Auerbach, Klaus**
**Holbeinstrasse 14**
**W-6550 Bad Kreuznach(DE)**

(74) Vertreter: **Beckensträter, Friedrich Wilhelm, Dr.**
**Falkensteiner Strasse 23**
**W-6000 Frankfurt am Main 1(DE)**

# Beschreibung

Die Erfindung betrifft ein elektromagnetisch betätigbares Druckregelventil mit einem in einem Ventilgehäuse angeordneten Steuerkolben, der mittels eines Regelmagneten in axialer Richtung bewegbar ist, bei stromlosem Regelmagneten in eine definierte Endstellung bewegbar ist, in der ein Behälteranschluß gesperrt ist und ein Verbraucheranschluß mit einem Druckanschluß verbunden ist, und zwei Steuerkanten aufweist, von denen eine einen Durchgang von dem Verbraucheranschluß zu dem Druckanschluß und die andere einen Durchgang von dem Verbraucheranschluß zu dem Behälteranschluß steuert, wobei eine vom Druck am Verbraucheranschluß beaufschlagte Gegenkraft-Kolbenanordnung mit dem Steuerkolben in Wirkverbindung steht.

Elektromagnetisch betätigbare Druckregelventile werden beispielsweise bei elektrohydraulischen Bremseinrichtungen an Straßenbahn-, U-Bahn- und anderen Fahrzeugen verwendet. Bei diesen Bremseinrichtungen ist neben der Druckregelung noch eine Notfunktion zu erfüllen, durch die bei Stromausfall noch eine hydraulische Beaufschlagung der Bremsbetätigungsorgane sichergestellt wird. Zur Erfüllung dieser Notfuktion war es bekannt, in den Bremseinrichtungen ein zusätzliches Schaltventil vorzusehen. Diese bekannten Ausführungen haben jedoch den Nachteil, daß ein verhältnismäßig großer Geräte- und Verrohrungsaufwand erforderlich ist.

Durch die DE-A-2621 272 ist eine elektromagnetische Betätigungsvorrichtung gemäß Oberbegriff von Patentanspruch 1 bekannt geworden. Diese ist insbesondere so gestaltet, daß sie sich in stromlosem Zustand, wenn keine elektromagnetische Kraft erzeugt wird, in einer Extrem- bzw. Endstellung befindet, in der die Regelfunktion noch stattfindet, und zwar infolge des Kraftgleichgewichts von Gegenkolbenanordnung und Feder. Die Kräfte beider regeln den Druck P im Ausgang. Wird hingegen durch die Spule ein Steuerstrom geschickt, wird eine elektromagnetische Kraft erzeugt, die gegen die Kraft der Feder wirkt, so daß der Druck P am Ausgang abgesenkt wird und bis O gemindert werden kann. Es handelt sich bei dieser Betätigungsvorrichtung um einen einfachen Regelmechanismus, die keine von diesem Regelmechanismus unabhängige, separate Notfunktionsstellung aufweist. Vielmehr wird bei Ausfall der elektromagnetischen Druckregelung lediglich der maximale Regeldruck festgehalten. Eine Notfunktion könnte überhaupt nur von der Feder ausgeübt werden, die jedoch nicht im Sinne der Magnetkraft wirkt und eine so hohe Kraft aufweisen müßte, daß sie bei maximalem Regeldruck allein das Gleichgewicht zur dortigen Gegenkraft-Kolbenanordnung halten kann, was eine hochbeanspruchbare Feder erfordern würde. Denn wenn die Feder bricht, kann sie auch eine Notfunktion nicht mehr ausüben, so daß eine Notfunktion nicht sicher gewährleistet wäre. Jedoch ist eine Druckerhöhung über den maximalen Regeldruck hinaus durch Verwendung einer stärkeren Feder schon deshalb nicht denkbar, weil dann die elektromagnetische Kraft Fe im gleiche Maße erhöht werden müßte.

Der vorliegenden Erfindung liegt daher die Aufgabe zugrunde, ein elektromagnetisch betätigbares Druckregelventil gemäß Oberbegriff von Anspruch 1 zu schaffen, das zusätzlich und zuverlässig die Steuerung einer Notfunktion ermöglicht und dieses Ziel mit geringem konstruktiven Aufwand erreicht.

Erfindungsgemäß wird diese Aufgabe dadurch gelöst, daß der Steuerkolben bei stromlosem Regelmagneten aus seinem zur Druckregelung erforderlichen Bewegungsbereich heraus in Richtung der Kraft der Gegenkraft-Kolbenanordnung in seine definierte Endstellung bewegbar ist, in der der Druckregelung dienende Steuerkanten des Steuerkolbens und Ventilgehäuses wirkungslos sind und in der mittels zusätzlicher Steuerkanten der Behälteranschluß gesperrt und ein Verbindungskanal vom Verbraucheranschluß zum Druckanschluß geöffnet ist, und daß in dieser Endstellung der Anschluß der Gegenkraft-Kolbenanordnung gegenüber dem Verbraucheranschluß verschlossen ist.

Dabei ist die Gegenkraft-Kolbenanordnung so getroffen, daß bei Ausfall des Steuerstroms der Verbraucheranschluß direkt mit dem Druckanschluß verbunden ist, so daß der volle Druck einer an den Druckanschluß angeschlossenen Druckmittelquelle zur Notbetätigung der an dem Verbraucheranschluß angeschlossenen Bremsbetätigungsvorrichtungen zur Verfügung steht. Der Druck kann somit bei stromlosem Zustand auf einem zweiten Wege zum Verbraucheranschluß gelangen, während die Gegenkraft-Kolbenanordnung drucklos ist. Mit den seither bekannten Druckregelventilen konnte eine solche Notfunktion nicht erreicht werden, da bei stromlosem Regelmagneten eine Druckabsenkung am Verbraucheranschluß auf den Behälterdruck erfolgte. Beim Übergang wieder von der Notfunktionsstellung in die Regelstellung ist erfindungsgemäß der Verbraucheranschluß zunächst mit dem Druckanschluß verbunden, so daß an der Gegenkraft-Kolbenanordnung zunächst noch kein Druck ansteht, der den Übergang in die Regelstellung beeinträchtigen bzw. dämpfen könnte.

Vorzugsweise ist die Gegenkraft-Kolbenanordnung gebildet durch die Zylinderbohrung am Steuerkolben und den gehäusefesten, in die Zylinderbohrung eintauchenden, darin druckdicht geführten Gegenkraftkolben.

Nach einem weiteren Vorschlag der Erfindung ist das Druckregelventil so ausgebildet, daß der Steuerkolben bei seiner Bewegung aus der Endstellung in den Bewegungsbereich zur Druckregelung zunächst den Verbraucheranschluß mit dem Behälteranschluß verbunden. Erfindungsgemäß weist der Steuerkolben weiterhin vorzugsweise zwei Steuernuten auf, deren kreisringförmige Endflächen die Steuerkanten bilden, wobei die dem Regelmagneten näher liegende Nut in beiden Endstellungen des Steuerkolbens den Druckanschluß mit dem Verbraucheranschluß und die andere Nut in einer zwischen den Endstellungen liegenden Stellung des Steuerkolbens den Verbraucheranschluß mit dem Behälteranschluß verbindet. Mit dieser erfindungsgemäßen Ausgestaltung wird eine einfache Kanalführung im Ventilgehäuse und eine einfache Ausbildung des Steuerkolbens erzielt.

Zur Bewegung des Steuerkolbens in die Endstellung ist zweckmäßig eine Druckfeder vorgesehen, deren Vorspannkraft der Steuerkraft des Regelmagneten entgegengerichtet ist. Vorzugsweise ist die Druckfeder auf einem gehäusefesten Gegenkolben gelagert, der in eine mit dem Verbrauchanschluß verbindbare Zylinderbohrung im Steuerkolben eintaucht. Die Begrenzung der Endstellung erfolgt erfindungsgemäß auf einfache Weise durch einen im Ventilgehäuse für den Steuerkolben vorgesehenen Anschlagring, der sich an dem mit dem Ventilgehäuse verbundenen Regelmagneten abstützt.

Gegenüber dem Stande der Technik wird erfindungsgemäß erstmals eine Notfunktion geschaffen, in der dem Verbraucher der volle Pumpendruck zur Verfügung steht, der Verbraucher also mit einem höheren Druck beaufschlagt werden kann, als dies im Regelbereich des Druckventils möglich ist. Dies ist auf verschiedenen Anwendungsgebieten, bei-spielsweise bei elektrohydraulischen Bremseinrich-tungen an Schienenfahrzeugen, erwünscht. Das erfindungsgemäße Druckregelventil hat außerdem den Vorteil, daß es mit geringem Kostenaufwand herstellbar ist und daß sein Verbrauch an Hilfsenergie beim Regelvorgang äußerst niedrig ist. Weiterhin zeichnet sich das erfindungsgemäße Druckregelventil durch eine minimale Leckage aus.

Weitere Merkmale und Vorteile der Erfindung ergeben sich aus der nachfolgenden Beschreibung bevorzugter Ausführungsbeispiele, die in der Zeichnung dargestellt sind.

Es zeigen:

Fig. 1    einen Längsschnitt durch ein Druckregelventil, wobei der Steuerkolben sich in der Endstellung befindet,

Fig. 2    einen Längsschnitt durch das Druckregelventil gemäß Fig. 1, wobei der Steuerkolben sich in einer Regelstellung befindet,

Fig. 3    einen Längsschnitt durch ein Druckregelventil mit einem Anschlagring für den Steuerkolben und

Fig. 4    einen vergrößerten Ausschnitt aus Fig. 2, der die Steuerkanten zur Druckregelung enthält.

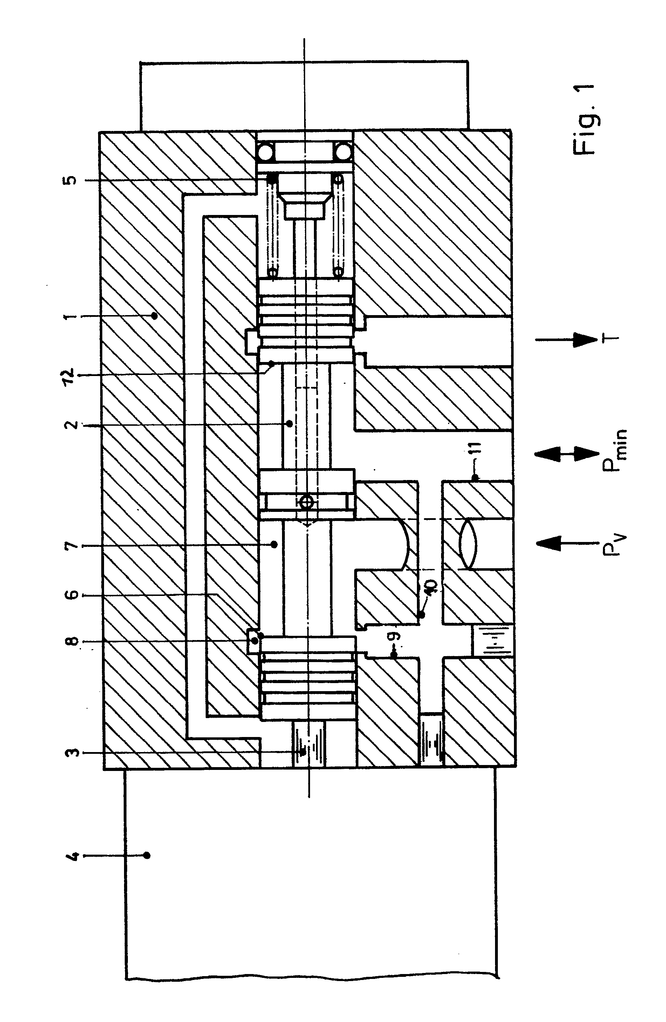

Das in den Fig. 1, 2 und 4 dargestellte Druckregelventil besteht aus einem Ventilgehäuse 1 mit einer durchgehenden Längsbohrung, in der ein Steuerkolben 2 axial verschieblich und flüssigkeitsdicht gelagert ist, der über einen Stößel 3 eines Regelmagneten 4 betätigbar ist. Der Steuerkolben 2 wird von einer Druckfeder 5 gegen den Stößel 3 des Regelmagneten 4 gedrückt, wobei die Vorspannung der Druckfeder 5 ausreicht, um den Anker des Regelmagneten 4, wenn dieser stromlos ist, gegen eine Hubbegrenzung innerhalb des Regelmagneten 4 zu drücken.

In seiner Mantelfläche weist der Steuerkolben 2 in einem Abstand voneinander ringförmige Steuernuten 7, 14 auf, die mit ihren seitlichen Endflächen Steuerkanten 6, 12, 16a, 17a bilden. Die Steuerkante 6 wirkt mit einer in die Längsbohrung im Ventilgehäuse 1 eingestochenen Ringkammer 8 zusammen, die über Bohrungen 9, 10 mit einem Verbraucheranschluß 11 verbunden ist, der aus einer radial in die Längsbohrung mündenden Anschlußbohrung besteht. Die auf der entgegengesetzten Seite des Steuerkolbens 2 liegende Steuerkante 12 wirkt mit einer in die Längsbohrung eingestochenen Ringkammer 13 zusammen, die mit einem Behälteranschluß 15 in Verbindung steht. Die Steuerkanten 16a, 17a befinden sich an dem mittleren, zwischen den Steuernuten 7, 14 liegenden Kolbenabschnitt des Steuerkolbens 2 und wirken mit Steuerkanten 16b, 17b im Ventilgehäuse 1 zusammen, die an der Mündung des Verbraucheranschlusses 11 in die Längsbohrung ausgebildet sind, wie in Fig. 4 zu sehen. In dem mittleren Kolbenabschnitt des Steuerkolbens 2 befindet sich weiterhin ein Ringkanal 18, von dem eine radiale Bohrung 19 in eine Zylinderbohrung 21 im Innern des Steuerkolbens 2 führt, deren Querschnittsfläche mit 20 bezeichnet ist. In der Zylinderbohrung 21 ist ein Gegenkraftkolben 22 druckdicht geführt, der an einem Flansch 23 abgestützt ist. Der Flansch 23 ist mit dem Ventilgehäuse 1 verschraubt und verschließt das dem Regelmagneten 4 abgewandte Ende der Längsbohrung. Weiterhin ist die Druckfeder 5 auf einem Stutzen des Flansches 23 gelagert.

Die Druckmittelzufuhr erfolgt über einen Druckanschluß 24, der in allen Stellungen des Steuerkolbens 2 mit der Steuernut 7 in Verbindung steht. Die Räume an den beiden Stirnflächen des Steuerkolbens 2 sind zur Erzielung eines Druckausgleichs durch einen Kanal 25 miteinander verbunden und können zur Druckentlastung des Flansches 23 und des Regelmagneten 4 an den Behälteranschluß 15 angeschlossen sein.

Das beschriebene Druckregelventil hat folgende Wirkungsweise:

Fig. 1 zeigt den Steuerkolben 2 in seiner Endstellung bei stromlosem Regelmagneten 4. Die Druckfeder 5 drückt dabei den Steuerkolben 2 gegen den Stößel 3, der sich an einer Hubbegrenzung im Regelmagneten 4 abstützt. Die Steuerkante 6 öffnet in dieser Stellung des Steuerkolbens 2 die Ringkammer 8 und verbindet dadurch die Steuernut 7 über die Bohrungen 9, 10 mit dem Verbraucheranschluß 11. Das über den Druckanschluß 24 zugeführte Druckmittel kann somit ungehindert zum Verbraucheranschluß 11 gelangen, wodurch eine Notfunktion gewährleistet ist. Die zum Behälteranschluß 15 führende Ringkammer 13 wird dabei von der Steuerkante 12 geschlossen gehalten.

Der mittlere Abschnitt des Steuerkolbens 2 befindet sich dabei in einer Stellung, in der der Ringkanal 18 durch die Steuerkante 16b gegenüber dem Verbraucheranschluß 11 verschlossen ist. Der Druck im Verbraucheranschluß 11 kann daher nicht in die Zylinderbohrung 21 im Steuerkolben 2 gelangen, so daß der Steuerkolben 2 allein durch die Vorspannkraft der Druckfeder 5 gegen den Stößel 3 gedrückt wird.

Wird der Regelmagnet 4 mit einem Steuerstrom erregt, so wird, sobald die Magnetkraft die Vorspannkraft der Druckfeder 5 erreicht hat, der Steuerkolben 2 von dem Stößel 3 in Richtung auf die Druckfeder 5 bewegt, die dabei zusammengedrückt wird. Zunächst schließt die Steuerkante 6 des Steuerkolbens 2 die Ringkammer 8 und unterbricht dadurch die Druckzufuhr vom Druckanschluß 24 zum Verbraucheranschluß 11. Gleichzeitig mit dem Schließen der Ringkammer 8 öffnet die Steuerkante 12 die Ringkammer 13, wodurch der Verbraucheranschluß 11 über die Steuernut 14 mit dem Behälteranschluß 15 verbunden und der Druck am Verbraucheranschluß 11 zum Behälter hin abgebaut wird. Dies ist zweckmäßig, weil der Druck am Verbraucheranschluß im allgemeinen auf einen Wert zu regeln ist, der niedriger ist als der Druck am Druckanschluß.

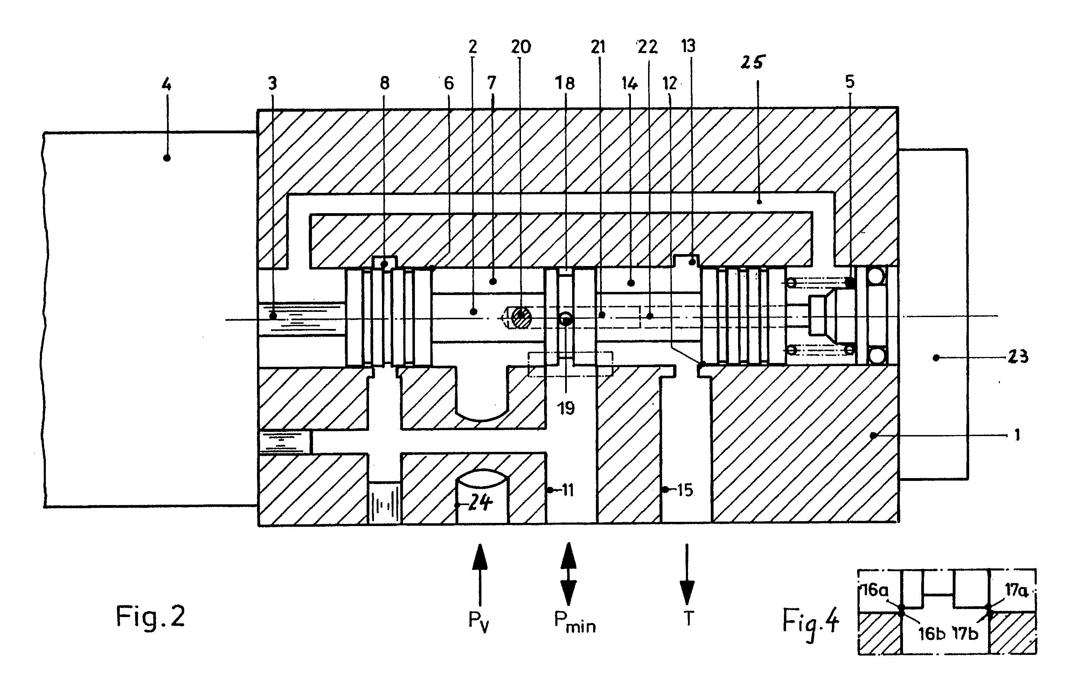

Der Steuerkolben 2 wird nun so lange gegen die Druckfeder 5 verschoben, bis die Steuerkante 16a gerade von der Steuerkante 16b abhebt und die Verbindung von der Steuernut 7 zum Verbraucheranschluß 11 öffnet und die Steuerkante 17a gerade die Steuerkante 17b bedeckt und die Verbindung von der Steuernut 14 zum Verbraucheranschluß 11 gerade schließt, wie in Fig. 2 gezeigt. Hierdurch fließt Druckmittel dosiert vom Druckanschluß zum Verbraucheranschluß und bewirkt am Verbraucheranschluß einen Druckanstieg.

Der Druck am Verbraucheranschluß gelangt über den Ringkanal 18 und die Bohrung 19 in die Zylinderbohrung 21 und beaufschlagt die Fläche 20. Am Steuerkolben 2 wird dadurch eine Gegenkraft wirksam, die der Betätigungskraft des Regelmagneten 4 entgegengerichtet ist. Sobald die durch einen bestimmten Erregerstrom von dem Regelmagneten 4 erzeugte Betätigungskraft mit der Kraft der Feder 5 und der durch den auf die Fläche 20 wirkenden Druck erzeugten Gegenkraft im Gleichgewicht ist, ist der Regelvorgang beendet. Der Druck im Verbraucheranschluß 11 entspricht dann dem durch den Erregerstrom vorgegebenen Wert.

Der Steuerkolben 2 nimmt dabei eine solche Stellung ein, daß der von den Steuerkanten 16a und 16b gebildete Öffnungsquerschnitt eine Druckdifferenz erzeugt, die der Differenz zwischen dem Druck im Druckanschluß 24 und dem Druck im Verbraucheranschluß 11 entspricht.

Erhöht sich im Verbraucheranschluß 11 durch Rückwirkungen des Verbrauchers der Druck, so wird diese Druckerhöhung auch an der Fläche 20 wirksam und sorgt für eine entsprechende Erhöhung der Gegenkraft. Hierdurch wird der Steuerkolben 2 gegen den Stößel 3 so weit zum Regelmagneten 4 hin verschoben, bis der Verbraucheranschluß 11 durch die Steuerkanten 16a und 16b von der Steuernut 7 getrennt und durch die Steuerkanten 17a und 17b mit der Steuernut 14 verbunden ist. Nun kann das Druckmittel durch die von den Steuerkanten 17a und 17b gebildete Durchtrittsfläche zum Behälter fließen, bis der Druck im Verbraucheranschluß 11 so weit abgebaut ist, daß die auf den Steuerkolben 2 einwirkenden Kräfte wieder im Gleichgewicht sind.

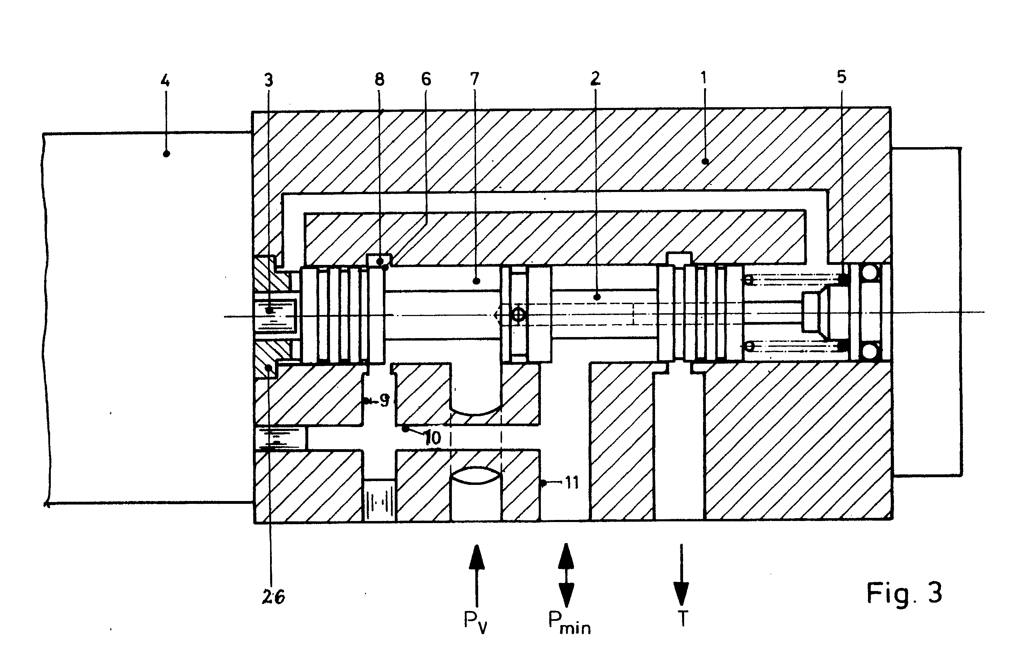

Im Unterschied zu dem in Fig. 1 dargestellten Druckregelventil ist bei dem Druckregelventil gemäß Fig. 3 in das dem Regelmagneten 4 zugekehrte Ende der Längsbohrung im Ventilgehäuse 1 ein Anschlagring 26 eingesetzt, der von dem mit dem Ventilgehäuse 1 verbundenen Regelmagneten 4 gehalten wird. Bei stromlosem Regelmagneten 4 wird der Steuerkolben 2 von der Druckfeder 5 gegen den Anschlagring 26 gedrückt, wobei dieser sich am Regelmagneten 4 abstützt. Auf diese Weise wird durch den Anschlagring 26 die Endstellung des Steuerkolbens 2 für die Steuerung der Notfunktion auf einfache Weise definiert. Ein besonderes Anschlagelement im Regelmagneten 4 ist daher nicht erforderlich.

Das erfindungsgemäße Druckregelventil ist insbesondere für elektrohydraulische Bremseinrichtungen an Straßenbahn-, U-Bahn- und anderen Fahrzeugen vorgesehen, kann aber auch bei Werkzeugmaschinen und anderen hydraulisch gesteuerten Einrichtungen Anwendung finden.

## Patentansprüche

1. Elektromagnetisch betätigbares Druckregelventil mit einem in einem Ventilgehäuse angeordneten Steuerkolben (2), der mittels eines Regelmagneten (4) in axialer Richtung bewegbar ist, bei stromlosem Regelmagneten (4) in eine definierte Endstellung bewegbar ist, in der ein Behälteranschluß (15) gesperrt ist und ein Verbraucheranschluß (11) mit einem Druckanschluß (24) verbunden ist, und zwei Steuerkanten (16, 17) aufweist, von denen eine (16) einen Durchgang von dem Verbraucheranschluß (11) zu dem Druckanschluß (24) und die andere (17) einen Durchgang von dem Verbraucheranschluß (11) zu dem Behälteranschluß (15) steuert, wobei eine vom Druck am Verbraucheranschluß (11) beaufschlagte Gegenkraft-Kolbenanordnung (21, 22) mit dem Steuerkolben (2) in Wirkverbindung steht, **dadurch gekennzeichnet,** daß der Steuerkolben (2) bei stromlosem Regelmagneten (4) aus seinem zur Druckregelung erforderlichen Bewegungsbereich (Fig. 2) heraus in Richtung der Kraft der Gegenkraft-Kolbenanordung (21, 22) in seine definierte Endstellung (Fig. 1 ) bewegbar ist, in der der Druckregelung dienende Steuerkanten (16a, 17a des Steuerkolbens 2 und 16b, 17b des Ventilgehäuses 1) wirkungslos sind (Fig. 1) und in der mittels zusätzlicher Steuerkanten (6, 12 des Steuerkolbens 2) der Behälteranschluß (15) gesperrt und ein Verbindungskanal (9, 10) vom Verbraucheranschluß (11) zum Druckanschluß (24) geöffnet ist, und daß in dieser Endstellung der Anschluß (Bohrung 19) der Gegenkraft-Kolbenanordnung (21, 22) gegenüber dem Verbraucheranschluß (11) verschlossen ist.

2. Druckregelventil nach Anspruch 1, dadurch gekennzeichnet, daß die Gegenkraft-Kolbenanordnung durch die Zylinderbohrung (21) im Steuerkolben (2) und einen gehäusefesten, in die Zylinderbohrung (21) eintauchenden, darin druckdicht geführten Gegenkraftkolben (22) gebildet wird.

3. Druckregelventil nach Anspruch 1 oder 2, dadurch gekennzeichnet, daß der Steuerkolben (2) bei seiner Bewegung aus der Endstellung (Fig. 1) in den Bewegungsbereich zur Druckregelung (Fig. 2) zunächst den Verbraucheranschluß (11) mit dem Behälteranschluß (15) verbindet.

4. Druckregelventil nach einem der Ansprüche 1 bis 3, dadurch gekennzeichnet, daß der Steuerkolben (2) zwei Steuernuten (7, 14) aufweist, deren kreisringförmige Endflächen die Steuerkanten (6, 12, 16a, 16b) bilden, wobei die dem Regelmagneten (4) näherliegende Nut (7) in beiden Endstellungen des Steuerkolbens (2) den Druckanschluß (24) mit dem Verbraucheranschluß (11) und die andere Nut (14) in einer zwischen den Endstellungen liegenden Stellung des Steuerkolbens (2) den Verbraucheranschluß (11) mit dem Behälteranschluß (15) verbindet.

5. Druckregelventil nach einem der Ansprüche 1 bis 4, dadurch gekennzeichnet, daß zur Bewegung des Steuerkolbens (2) in die Endstellung am Steuerkolben (2) eine Druckfeder (5) abgestützt ist, deren Vorspannkraft der Steuerkraft des Regelmagneten (4) entgegengerichtet ist.

6. Druckregelventil nach Anspruch 5, dadurch gekennzeicht, daß die Druckfeder (5) auf einem gehäusefesten Gegenkolben (22) gelagert ist, der in eine mit dem Verbraucheranschluß (11) verbindbare Zylinderbohrung (21) im Steuerkolben (2) hineinragt.

7. Druckregelventil nach einem der Ansprüche 1 bis 6, dadurch gekennzeichnet, daß zur Begrenzung der Endstellung des Steuerkolbens (2) im Ventilgehäuse (1) ein Anschlagring (26) vorgesehen ist, der an dem Regelmagneten (4) abgestützt ist.

**Claims**

1. Pressure control valve with electromagnetic control, comprising a control piston (2) in a valve housing, said control piston being axially movable by a control solenoid (4), and movable to a defined end position when the control solenoid (4) is deenergized, a reservoir port (15) being closed and a consumer port (11) being connected to a pressure port (24) in said defined end position, said control piston having two control edges (16, 17), one (16) controlling a passage from the consumer port (11) to the pressure port (24), the other (17) controlling a passage from the consumer port (11) to the reservoir port (15), an opposing piston arrangement (21, 22) receiving the pressure at the consumer port (11) and being operatively connected with the control piston (2), characterised in that when the control solenoid (4) is deenergized, the control piston (2) is movable out of its range of movement needed for pressure control (Fig. 2) in direction of the force exerted by the opposing piston arrangement (21, 22) to its defined end position (Fig. 1), in which the control edges (16a, 17a of the control piston 2 and 16b, 17b of the valve housing 1) used for pressure control become inoperative (Fig. 1), and in which the reservoir port (15) is closed and a connecting duct (9, 10) leading from the consumer port (11) to the pressure port (24) is opened by additional control edges (6, 12 of control piston 2), and that the connecting port(bore 19) of the opposing piston arrangement (21, 22) is closed against the consumer port (11) in this end position.

2. Pressure control valve according to claim 1, characterised in that the opposing piston arrangement is constituted by the cylinder bore (21) in the control piston (2) and an opposing piston (22) rigidly connected to the housing and plunging into the cylinder bore (21), therein being sealed and guided.

3. Pressure control valve according to claim 1 or 2, characterised in that the control piston (2) first connects the consumer port (11) with the reservoir port (15) when moving from its end position (Fig. 1) to the range of movement for pressure control (Fig. 2).

4. Pressure control valve according to one of the claims 1 to 3, characterised in that the control piston (2) has two control grooves (7, 14) with circular end faces constituting the control edges (6, 12, 16a, 16b), the groove (7) located closer to the control solenoid (4) connecting the pressure port (24) with the consumer port (11) in both end positions of the control piston (2), and the other groove (14) connecting the consumer port (11) with the reservoir port (15) in a position of the control piston (2) lying between the end positions.

5. Pressure control valve according to one of the claims 1 to 4, characterised in that a compression spring (5) pre-tensioned against the control force of the control solenoid (4) and supported by the control piston (2) is provided for the movement of the control piston (2) to its end position.

6. Pressure control valve according to claim 5, characterised in that the compression spring (5) is supported on an opposing piston (22) rigidly connected to the housing and projecting into a cylindrical bore (21) in the control piston (2), said bore being connectable to the consumer port (11).

7. Pressure control valve according to one of the claims 1 to 6, characterised in that an annular stop (26) supported by the control solenoid (4) is provided for limiting the end position of the control piston (2) in the valve housing (1).

**Revendications**

1. Vanne de régulation de pression électromagnétiquement commandée comportant, dans un corps de vanne, un piston de réglage (2) pouvant être axialement déplacé par un électro-aimant de commande (4) et pouvant être placé dans une position fin de course définie lorsque l'électro-aimant de commande (4) est sans courant, une connexion de réservoir (15) étant fermée et une connexion de consommateur (11) étant reliée à une connexion de pression (24) dans cette position, et comportant deux bords de commande (16, 17), l'un (16) commandant un passage de la connexion du consommateur (11) à la connexion de pression (24), l'autre (17) un passage de la connexion du consommateur (11) à la connexion du réservoir (15), un arrangement de piston en opposition (21, 22) soumis à la pression à la connexion du consommateur (11) étant en contact opératoire avec le piston de réglage (2), **caractérisée par** le piston de réglage (2) pouvant être mû de sa plage de déplacement nécessaire à la régulation de la pression (Fig. 2) à sa position de fin de course définie (Fig. 1) lorsque l'électroaimant de réglage (4) est sans courant, les bords de commande servant au réglage de la pression (16a, 17a du piston de commande 2 et 16b, 17b du corps de vanne 1) étant sans effet dans cette position (Fig. 1) et des bords supplémentaires (6, 12 du piston de commande 2) fermant la connexion du réservoir (15) et ouvrant une voie (9, 10) reliant la connexion du consommateur (11) à la connexion de pression (24), l'orifice (alésage 19) de l'arrangement de piston en opposition (21, 22) étant fermée vers la Connexion du consommateur (11) dans cette position de fin de course.

2. Vanne de régulation de pression selon la revendication 1, caractérisée par l'arrangement de piston en opposition constitué par l'alésage cylindrique (21) dans le piston de réglage (2) et un piston en opposition (22) rigidement relié au corps et plongeant dans l'alésage cylindrique (21) dans lequel il est guidé étanche contre la pression.

3. Vanne de régulation de pression selon la revendication 1 ou 2, caractérisée par le piston de réglage (2), lors de son mouvement de la position fin de course (Fig. 1) à la plage de mouvement pour réglage de pression (Fig. 2) reliant d'abord la connexion du consommateur (11) à la connexion du réservoir (15).

4. Vanne de régulation de pression selon une des revendications 1 à 3, caractérisée par le piston de réglage (2) comportant deux rainures de commande (7, 14) dont les faces annulaires constituent les bords de commande (6, 12, 16a, 16b), la rainure (7) voisine de l'électro-aimant de commande (4) reliant la connexion de pression (24) à la connexion du consommateur (11) dans les deux positions de fin de course du piston de réglage (2), l'autre rainure (14) reliant la connexion du consommateur (11) à la connexion du réservoir (15) dans une position du piston de réglage (2) entre les deux positions de fin de course.

5.  Vanne de régulation de pression selon une des revendications 1 à 4, caractérisée par un ressort de compression (5) à précontrainte opposée à la force de commande de l'électro-aimant de commande (4) et s'appuyant sur le piston de réglage (2), servant à ramener le piston de réglage (2) en position de fin de course.

6.  Vanne de régulation de pression selon la revendication 5, caractérisée par le ressort de compression (5) supporté sur un piston en opposition (22) rigidement relié au corps et entrant dans un alésage cylindrique (21) du piston de réglage (2), cet alésage pouvant être relié à la connexion du consommateur (15).

7.  Vanne de régulation de pression selon l'une des revendications 1 à 6, caractérisée par une butée annulaire (26) supportée par l'électro-aimant de commande (4) et utilisée pour limiter la position de fin de course du piston de réglage (2) dans le corps de vanne (1).

Fig. 1

$P_{min}$

$P_V$

T

Fig.2

Fig.4

Fig. 3